# EUROPÄISCHE PATENTSCHRIFT

(11) **EP 2 607 123 B1**
(45) Veröffentlichungstag und Bekanntmachung des Hinweises auf die Patenterteilung: **13.05.2020**
(21) Anmeldenummer: 13160021.5
(22) Anmeldetag: 30.06.2010
(51) Int. Cl.: B60J 5/10

(54) **Vorrichtung zur Anordnung von Sensoren für eine elektronische Betätigung einer Klappe eines Kraftfahrzeugs**
Device for arranging sensors for electrical actuation of a motor vehicle hatch
Dispositif d'agencement de capteurs pour un actionnement électronique d'un hayon de véhicule automobile

(30) Priorität: 17.07.2009 DE 102009033737
(43) Veröffentlichungstag der Anmeldung: 26.06.2013
(62) Teilanmeldung aus: 10167850.6
(73) Patentinhaber: Huf Hülsbeck & Fürst GmbH & Co. KG, 42551 Velbert (DE)
(72) Erfinder: Buss, Wolfgang, 42697 Solingen (DE)
(74) Vertreter: Vogel, Andreas

(56) Entgegenhaltungen:
- EP-A1- 1 600 336
- EP-A2- 0 770 749
- DE-A1-102004 037 257
- GB-A- 2 348 505
- US-A1- 2008 296 926

## Beschreibung

Die Erfindung richtet sich auf eine Anordnung einer Sensoreinrichtung mit wenigstens einem Sensor für eine berührungslose Betätigung wenigstens eines beweglichen Teils eines Kraftfahrzeugs, insbesondere einer Klappe eines Kraftfahrzeugs, wobei der Sensor an wenigstens einem Trägerkörper am Kraftfahrzeug angeordnet ist, um eine Detektion eines Objektes in wenigstens einem an das Kraftfahrzeug angrenzenden Detektionsbereich zu ermöglichen, so dass über die Detektion die Betätigung der Heckklappe aktivierbar ist.

Zur berührungslosen Betätigung von beweglichen Teilen eines Kraftfahrzeugs sind Sensoreinrichtungen bekannt, die das Vorhandensein und insbesondere die Bewegung einer Person sensieren, um darin den Wunsch zur Öffnung des beweglichen Teils des Kraftfahrzeugs zu erkennen. Das bewegliche Teil des Kraftfahrzeugs kann eine Klappe und insbesondere eine Heckklappe des Kraftfahrzeugs betreffen, wobei auch bewegliche Fensterelemente bekannt sind, wie etwa eine in einer Heckklappe bewegbare Heckscheibe, die dann durch eine gattungsbildende Sensoreinrichtung vorteilhaft geöffnet oder geschlossen werden kann, wenn eine manuelle Betätigung der Heckklappe nicht oder nur erschwert möglich ist. Im Folgenden wird das bewegliche Teil vereinfachend als Klappe bezeichnet.

Das durch die Sensoreinrichtung detektierte Objekt kann eine Person sein, die sich dem Kraftfahrzeug in der Absicht nähert, die Heckklappe zu öffnen. Die Betätigung der Heckklappe beschreibt dabei sowohl einen Öffnungsvorgang, beispielsweise wenn die Person einen Gegenstand beidhändig in den Kofferraum einlegen möchte oder die Betätigung der Heckklappe betrifft einen Schließvorgang der Heckklappe, wenn die Person beidhändig einen Gegenstand aus dem Kofferraum entnommen hat, um anschließend die Heckklappe zu schließen.

Die Sensoreinrichtung umfasst dabei wenigstens einen Sensor, der über einen Trägerkörper am Kraftfahrzeug angeordnet ist. Die Sensoren zur Heckklappenbetätigung sind gewöhnlich innenseitig im Stoßfänger angebracht, so dass der Trägerkörper durch den Stoßfänger selbst gebildet ist. Dabei ist bekannt, die Sensoren innenseitig auf der Oberfläche des Stoßfängers aufzukleben oder zu laminieren, wobei die Sensoren als kapazitiv wirkende Elektroden drahtartig oder folienartig ausgebildet sind. Dabei werden die Drähte oder Folien der durch Elektroden gebildeten Sensoren wenigstens über einen Teil oder bevorzugt über der gesamten Breite des Stoßfängers des Kraftfahrzeugs angebracht. Folglich ist eine Betätigung der Heckklappe des Kraftfahrzeugs aus verschiedenen Bereichen in der näheren Umgebung des Hecks des Kraftfahrzeugs möglich. Damit sind die Sensoren Bestandteil des hinteren Stoßfängers, die innenseitig im Stoßfänger aufgeklebt oder mit Befestigungsmitteln am Stoßfänger befestigt sind. Insbesondere ist bekannt, die Sensoren bereits im Kunststoff-Spritzgussprozess zur Herstellung des Stoßfängers einzusetzen, um ein einteiliges Bauteil mit umspritzten Sensoren zu erhalten.

Die Druckschrift EP 1 600 336 A1 offenbart eine Anordnung einer Sensoreinrichtung mit wenigstens einem Sensor für eine Betätigung eines beweglichen Teils eines Kraftfahrzeugs. Der Sensor ist dabei an einem Strukturbauteil eines Kraftfahrzeugs angeordnet.

Daraus ergibt sich jedoch der Nachteil, dass wesentliche Komponenten des Kraftfahrzeugs, beispielsweise die hintere Stoßstange, unterschieden werden müssen in Bauteile, die die Sensoreinrichtung aufweisen, und Bauteile, die ohne die Sensoreinrichtung ausgeführt sind.

Folglich ist eine Verringerung der Variantenvielfalt einzelner Fahrzeugbestandteile wünschenswert.

Es ist daher die Aufgabe der vorliegenden Erfindung, eine Anordnung einer Sensoreinrichtung zu schaffen, die eine vereinfachte Anordnung der Sensoren der Sensoreinrichtung im Kraftfahrzeug ermöglicht. Ferner ist es die Aufgabe der vorliegenden Erfindung, eine erhöhte organisatorische Flexibilität der Anordnung des Sensors für eine Sensoreinrichtung im Kraftfahrzeug zu schaffen.

Diese Aufgabe wird ausgehend von einer Anordnung einer Sensoreinrichtung gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass der Sensor formschlüssig und/oder kraftschlüssig am Trägerkörper angeordnet ist. Damit wird der Vorteil erreicht, dass eine vereinfachte Anordnung des oder der Sensoren am Trägerkörper ermöglicht ist. Eine formschlüssige und/oder kraftschlüssige Anordnung des Sensors am Trägerkörper betrifft dabei jede Form der Anordnung, die nicht auf einer stoffschlüssigen Verbindung zwischen dem Sensor und dem Trägerkörper beruht und die keine Verwendung weiterer Befestigungselemente wie Schrauben, Nieten oder dergleichen erfordert.

Vorzugsweise betrifft die vorliegende formschlüssige Anordnung des Sensors am Trägerkörper eine Clips- oder Schnappverbindung, die gemäß einem weiteren Vorteil sogar wieder lösbar sein kann. Der Trägerkörper kann am Kraftfahrzeug angeordnet werden, wobei der Trägerkörper auch Bestandteil des Kraftfahrzeugs sein kann. Eine Anordnung "am" Kraftfahrzeug umfasst dabei auch eine Anordnung "im" Kraftfahrzeug, etwa innenseitig hinter einem hinteren Stoßfänger.

Folglich kann ein Trägerkörper im Kraftfahrzeug vorgesehen sein, der als Basisbauteil für jedes Kraftfahrzeug einsetzbar ist, und sowohl ohne eine Sensoreinrichtung als auch mit einer Sensoreinrichtung eine Funktion im Kraftfahrzeug erfüllen oder wenigstens im Kraftfahrzeug vorhanden sein kann. Gemäß eines weiteren Vorteils kann in einem sehr späten Stadium der Montage des Kraftfahrzeugs entschieden werden, ob eine Sensoreinrichtung als weiteres Merkmal des Kraftfahrzeugs vorgesehen sein soll oder nicht, da die Sensoreinrichtung wahlweise im Kraftfahrzeug eingebracht werden kann oder nicht, ohne eine Entscheidung über die Verwendung weiterer Bauteile treffen zu müssen.

Gemäß einer vorteilhaften Ausführungsform des Trägerkörpers kann dieser als einzeln handhabbares Trägermodul derart ausgeführt sein, dass das Trägermodul als im Wesentlichen vollständige Funktionseinheit in und/oder am Kraftfahrzeug befestigbar ist. Das Trägermodul kann dabei auf einem Aufnahmekörper basieren, an dem weitere Funktionseinheiten wie wenigstens ein Sensor angebracht werden können. Folglich kann das Trägermodul nur dann in einem Kraftfahrzeug montiert werden, wenn auch eine Sensoranordnung zur berührungslosen Betätigung einer Klappe eines Kraftfahrzeugs gewünscht ist. Unterbleibt dieses Merkmal an einem Kraftfahrzeug, so kann die Anordnung des Moduls als vollständige Funktionseinheit im Kraftfahrzeug unterbleiben.

Hingegen kann das Kraftfahrzeug einen Stoßfänger und/oder ein Strukturbauteil aufweisen, wobei der Trägerkörper durch den Stoßfänger bzw. durch das Strukturbauteil selbst gebildet werden kann. Folglich kann der Stoßfänger und/oder das Strukturbauteil mit den jeweiligen Funktionseinheiten der Sensoreinrichtung konfektioniert werden, um diesen oder dieses anschließend am Kraftfahrzeug zu montieren. Im Ergebnis ist kein separater Trägerkörper notwendig, sofern der Trägerkörper durch ein Bauteil gebildet wird, das ohnehin in oder am Fahrzeug vorhanden ist.

Die Sensoren können vorzugsweise als kapazitiv wirkende Sensoren ausgeführt werden, so dass diese Elektroden besitzen bzw. bilden, auf denen durch die Elektrikeinheit eine gewisse Ladung aufrecht erhalten wird. Ändert sich die kapazitive Kopplung zwischen den Elektroden und dem Außenbereich des Kraftfahrzeugs, beispielsweise indem sich eine Person in den Detektionsbereich der Sensoren hineinbewegt, so ändert sich durch eine Änderung der Ladung auf den Elektroden, was durch die Elektrikeinheit messbar wird. Insbesondere kann die Elektrikeinheit eine Referenzladung aufweisen, so dass der Abgleich zwischen der Referenzladung, beispielsweise in Form eines Kondensators in der Elektrikeinheit, und den Elektroden eine messbare Größe des Vorhandenseins eines Objektes im Detektionsbereich des wenigstens einen Sensors bildet. Insbesondere kann eine Akkumulation der Ladung im Referenzkondensator innerhalb der Elektrikeinheit erfolgen, so dass die aufsummierte Ladung durch die Elektrikeinheit in ein Ausgangssignal umgewandelt werden kann, auf Basis dessen die Klappe des Kraftfahrzeugs geöffnet oder geschlossen wird.

Im Ergebnis ist es hinreichend, die Sensoren innerhalb, am oder durch den Trägerkörper unabgeschirmt im Fahrzeug aufzunehmen, sofern der Trägerkörper und der Stoßfänger keine metallischen Bauteile bilden, die eine Abschirmung der Sensoren bewirken. Folglich ist der Trägerkörper vorzugsweise aus einem Kunststoffmaterial hergestellt, der gemäß einem weiteren Vorteil der Erfindung durch einen Kunststoff-Spritzgussprozess hergestellt wird. Bevorzugt sind die Sensoren an der Seite des Trägerkörpers angeordnet, die in Richtung zum Stoßfänger des Kraftfahrzeugs weist, sodass die Sensoren sandwichartig zwischen dem Trägerkörper und dem Stoßfänger des Kraftfahrzeugs eingebracht sind.

Zur formschlüssigen Anordnung des Sensors am Trägerkörper kann der Trägerkörper wenigstens ein Formschlusselement aufweisen, über das der zumindest eine Sensor am Trägerkörper formschlüssig angeordnet wird, wobei vorzugsweise wenigstens ein Formschlusselement mit dem Trägerkörper einteilig ausgeführt ist. Insbesondere kann ein oder mehrere Formschlusselemente einteilig mit dem Trägerkörper ausgebildet sein, die gemeinsam mit dem Trägerkörper im Kunststoff-Spritzgussprozess herstellbar sind. Ferner kann zumindest ein Formschlusselement einteilig mit dem Trägerkörper gebildet werden, wobei ein weiteres Formschlusselement als Einzelteil ausgeführt sein kann, um eine vorzugsweise lösbare Verbindung des Sensors am Trägerkörper zu schaffen. Somit ist es insbesondere vorteilhaft, ein erstes Formschlusselement vorzusehen, welches einteilig mit dem Trägerkörper ausgeführt ist, wobei ein weiteres Formschlusselement vorgesehen sein kann, welches als Einzelteil ausgeführt ist und mit dem ersten Formschlusselement des Trägerkörpers so zusammenwirkt, dass der Sensor formschlüssig am Trägerkörper angeordnet wird.

Nach einer weiteren vorteilhaften Ausführungsform kann zumindest ein erstes Formschlusselement als Befestigungslasche ausgebildet sein, die insbesondere L-förmig aus einer Erstreckungsebene des Trägerkörpers herausragt. Die L-förmige Befestigungslasche kann zwei Schenkel aufweisen, so dass die Befestigungslasche über einen der beiden Schenkel einteilig in den Trägerkörper übergeht. Damit entsteht eine hakenförmige Anordnung, wobei die L-Form auch gekrümmt oder gleichförmig gebogen sein kann, so dass die beiden Schenkel in einer einheitlichen Krümmung ineinander übergehen, und eine C-förmige oder G-förmige Anordnung entsteht.

Nach einer Weiterbildung der Gestaltung der Formschlusselemente kann ein weiteres Formschlusselement als Gegenhalter ausgeführt sein, der derart aus der Erstreckungsebene des Trägerkörpers herausragt und eine Position relativ zur Befestigungslasche aufweist, so dass der Sensor verliersicher zwischen der Befestigungslasche und dem Gegenhalteram Trägerkörper angeordnet werden kann. Insbesondere kann der Gegenhalter auf der Seite der Befestigungslasche am Trägerkörper vorzugsweise einteilig angebracht sein, dass der Gegenhalter die Öffnungsseite der L-förmigen Befestigungslasche abdeckt. Befindet sich der Gegenhalter in einer benachbarten Position zur Befestigungslasche, kann der Sensor verliersicher zwischen der Befestigungslasche und dem Gegenhalter am Trägerkörper angebracht werden.

Der Sensor kann hierfür eine längliche, vorzugsweise schlauchartige Erstreckung aufweisen und vorzugsweise eine Flexibilität besitzen, die derart ausgeführt ist, dass der Sensor durch eine händisch einbringbare elastische Verformung zwischen der Befestigungslasche und den vorzugsweise zweifach vorhandenen Gegenhaltern einsetzbar ist. Sind in Erstreckungsrichtung des Sensors zwei Gegenhalter benachbart zur Befestigungslasche gegenüberliegend angeordnet, so entstehen drei Formschlusselemente, so dass die beiden Gegenhalter einer einzigen Befestigungslasche gegenüberstehen. Wird der biegsame Sensor derart verbogen, dass dieser zwischen der Befestigungslasche und den beiden Gegenhaltern eingesetzt werden kann, so entspannt sich der biegsame Sensor wieder in eine längliche, gerade Form. Folglich ist eine formschlüssige Verbindung des Sensors zwischen den Gegenhaltern und der Befestigungslasche geschaffen, so dass ohne ein erneutes elastisches Verformen des Sensors ein Lösen des Sensors aus den Formschlusselementen nicht möglich ist.

Der Trägerkörper kann in einer Breitenrichtung eine gestreckte Form aufweisen und derart im Kraftfahrzeug angeordnet werden, dass sich die Breitenrichtung quer über der Fahrzeugbreite erstreckt. Der Trägerkörper kann dabei vorzugsweise parallel beabstandet zum Stoßfänger im Heck des Kraftfahrzeugs integriert werden, wobei ferner ein Strukturbauteil im Heckbereich des Fahrzeugs eingebracht sein kann, das zur Aufnahme stärkerer mechanischer Einwirkungen auf das Fahrzeug, insbesondere in einem Crashfall, dient. Folglich kann der Trägerkörper zwischen dem Strukturbauteil und dem Stoßfänger des Kraftfahrzeugs integriert werden, so dass die Sensoren in Richtung zur Außenseite des Kraftfahrzeugs lediglich noch vom Trägerkörper selbst oder zumindest vom Stoßfänger abgeschirmt sind. Da der Trägerkörper und der Stoßfänger vorzugsweise nicht aus einem metallischen Material ausgebildet sind, ist keine Abschirmung zwischen den Sensoren und dem Außenbereich des Kraftfahrzeugs vorhanden, die die Detektionsbereiche der Sensoren beeinflussen können.

Vorzugsweise kann der Sensor mit seiner länglichen Erstreckung in Breitenrichtung des Trägerkörpers an diesem angeordnet werden, so dass sich der Sensor über der Fahrzeugbreite vorzugsweise im Heckbereich des Kraftfahrzeugs hinweg erstreckt. Der Sensor kann ein flexibles Kunststoff- oder Kautschukmaterial aufweisen, in dem eine Elektrode in Form eines Drahtes, eines Kabels oder eines metallischen Flachbandmaterials integriert ist. Ferner kann der Sensor zumindest eine Abschirmung besitzen, um eine dem Detektionsbereich des betreffenden Sensors gegenüberliegende Erdung zu schaffen, und um den Detektionsbereich zu verstärken oder gegen einen weiteren Detektionsbereich eines benachbarten Sensors abzuschirmen. Dabei ist der Kunststoff- oder Kautschukkörper des Sensors derart beschaffen, dass wenigstens die Elektrode und insbesondere die Abschirmung im Material des Sensors integriert sind.

Nach einer weiteren möglichen Ausführungsform des Formschlusselementes kann dieses als Befestigungsdom ausgeführt sein, der zur Aufnahme des Sensors eine Aufnahmetasche aufweist. Ferner kann der Befestigungsdom zur formschlüssigen Anordnung eines Clips ausgebildet sein, der als Gegenelement zur klemmenden Anordnung des Sensors zwischen der Aufnahmetasche und dem Clip ausgebildet ist. Der zwischen der Aufnahmetasche des Befestigungsdoms und dem Clip gebildete Aufnahmequerschnitt kann dabei dem Querschnitt des Sensors und insbesondere dem Querschnitt des Kunststoffkörpers entsprechen, der den tragenden, strukturbildenden Teil des Sensors darstellt. Vorzugsweise können mehrere Befestigungsdome einteilig mit dem Trägerkörper verbunden sein, so dass auch die Befestigungsdome unmittelbar im Spritzgussprozess zur Herstellung des Trägerkörpers mit ausgebildet werden. Die Befestigungsdome können sich dabei aus der Erstreckungsebene des Trägerkörpers heraus erstrecken, um den Sensor in einem gewissen Abstand zur Grundstruktur des Trägerkörpers anzuordnen.

Wird der Sensor am Befestigungsdom angebracht, so kann dieser zunächst in die Aufnahmetasche des Befestigungsdoms eingesetzt werden, um anschließend den Clip zu montieren. Der Clip kann eine U-förmige Gestalt aufweisen und an seinem freien U-Schenkeln Widerhaken besitzen, die zur Verrastung in Rastöffnungen am Befestigungsdom ausgeführt sind.

Der Trägerkörper weist eine in seiner Breitenrichtung verlaufende erste Reihe von Formschlusselementen und wenigstens eine zweite ebenfalls in Breitenrichtung verlaufende Reihe von Formschlusselementen auf. Dabei können die Reihen der Formschlusselemente vorzugsweise eine in der Einbausituation des Trägerkörpers im Kraftfahrzeug obere und eine untere Reihe bilden, um einen ersten, oberen Sensor und einen zweiten, unteren Sensor aufzunehmen. Die beiden länglichen Sensoren verlaufen in ihrer Längserstreckung vorzugsweise parallel zueinander, so dass die Formschlusselemente vorzugsweise gleich beabstandet zueinander mehrfach in wenigstens einer Reihe am Trägerkörper vorhanden sind. Der Sensor kann folglich über mehrere Formschlusselemente am Trägerkörper angebracht werden, wobei wenigstens zwei Formschlusselemente vorhanden sein müssen, um eine definierte Anordnung wenigstens eines Sensors am Trägerkörper zu schaffen. Insbesondere kann der Sensor auch aus einem starren, unflexiblen Material bestehen, so dass zwei Formschlusselemente hinreichend sein können, um den Sensor positionsfest und verliersicher am Trägerkörper anzubringen.

Zur zuverlässigen Detektion eines Objektes und vorzugsweise einer Person und zur zuverlässigen Erkennung des Öffnungswunsches der Klappe des Kraftfahrzeugs ist vorgesehen, dass der obere Sensor einen ersten Detektionsbereich aufweist, der im Wesentlichen für eine horizontale Erfassung im Bereich neben oder hinter dem Kraftfahrzeug ausgebildet ist und wobei der untere Sensor einen zweiten Detektionsbereich aufweist, der im Wesentlichen für eine vertikale Erfassung im Bereich unter dem Kraftfahrzeug ausgebildet ist. Somit kann sich beispielsweise eine Person dem Kraftfahrzeug nähern, was durch den oberen Sensor zunächst erkannt wird. Führt die Person mit dem Bein oder insbesondere mit dem Fuß eine Bewegung unter dem Fahrzeug aus, so addiert sich eine Sensormeldung durch den unteren Sensor zur Sensormeldung des oberen Sensors. Dies kann bereits als Öffnungswunsch der Klappe des Fahrzeugs erkannt werden, wobei der Detektion der Bewegung von Gliedmaßen durch die Person und der Erfassung durch die Sensoren ein spezifisches Bewegungsmuster aufgeprägt sein kann, um Fehlauslösungen der Bewegung der Klappe des Kraftfahrzeugs zu vermeiden.

Zum Betrieb der erfindungsgemäßen Sensoreinrichtung kann weiterführend ein ID- Geber vorgesehen sein, der mit der Elektrikeinheit oder einer weitern Fahrzeugselektronik vorzugsweise mittels einer drahtlosen Kommunikationsverbindung wirkverbunden ist und kommunizieren kann. Derartige ID- Geber sind auch als Zugangsberechtigungssysteme für einen Benutzer eines Kraftfahrzeugs bekannt und werden häufig als "Keyless-Go-Systeme" bezeichnet. Besitzt der Benutzer eines Kraftfahrzeugs einen derartigen ID- Geber, so wird dieser von einer Sende- Empfangseinheit innerhalb des Kraftfahrzeugs erkannt. Dadurch erfolgt eine Authentifizierung des Benutzers des Kraftfahrzeugs, so dass dieser beispielsweise das Kraftfahrzeug öffnen oder das Kraftfahrzeug in Betrieb nehmen kann. Die positive Erkennung des ID- Gebers und eine damit verbundene Authentifizierung der Person kann folgend an die Elektrikeinheit weitergegeben werden.

Erfindungsgemäß kann die Steuereinheit derart weitergebildet sein, dass eine Betätigung der Heckklappe erst dann erfolgt, wenn das Vorhandensein eines ID- Gebers durch die Elektrik erkannt und positiv authentifiziert wird. Befindet sich beispielsweise die Person mit dem ID- Geber nicht im Bereich des Kraftfahrzeugs, so können zwar die Kapazitätssensoren das Bewegungsmuster einer Person im Bereich der hinteren Stoßstange des Kraftfahrzeugs detektieren, jedoch löst die Steuereinheit nicht das Öffnen oder Schließen der Heckklappe aus.

Erst bei Vorhandensein des ID- Gebers und einer positiv erfolgten Authentifizierung erfolgt bei Detektieren eines Bewegungsmusters durch die Sensoren die Betätigung der Heckklappe. Die Erkennung des ID- Gebers durch eine Abfrage kann vorzugsweise erst dann erfolgen, wenn durch den oberen Sensor am Trägerkörper die Annäherung einer Person detektiert wird, sodass erst dann der untere Sensor aktiv geschaltet wird, wobei die Abfrage der Authentifizierung der Person auch vor oder nach der Detektion der Person durch einen oder beide Sensoren erfolgen kann.

Die Auslösung der Öffnung oder der Schließung der Heckklappe kann ferner davon abhängig gemacht werden, ob das Kraftfahrzeug fährt oder steht, wobei die Betätigung der Heckklappe vorzugsweise nur dann ausgelöst wird, wenn das Kraftfahrzeug steht und die Geschwindigkeit Null erkannt wird.

Der Trägerkörper kann ferner zur Aufnahme einer Elektrikeinheit und insbesondere einer Steuereinheit ausgebildet sein, wobei die Elektrikeinheit vorzugsweise über formschlüssig wirkende Aufnahmemittel am Trägerkörper anordbar ist. Dabei ist eine Aufnahmeebene vorgesehen, an die die Elektrikeinheit plan zur Anlage gebracht wird. Dabei wird eine Rastbewegung ausgeführt, da sich die Aufnahmemittel wenigstens teilweise über die Aufnahmeebene hinweg erstrecken. Damit entsteht eine taschenartige Aufnahmegeometrie, und die Elektrikeinheit kann in diese Aufnahmegeometrie eingerastet werden.

Gemäß einer anderen möglichen Ausgestaltung der Aufnahme der Elektrikeinheit am Trägerkörper können Befestigungsmittel vorgesehen sein, wobei die Befestigungsmittel vorzugsweise als Schraubenelemente ausgeführt sind.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: ein Ausführungsbeispiel einer Anordnung einer Sensoreinrichtung mit einem Trägerkörper, an dem mehrere Sensoren anordbar sind,
- Figur 2: ein erstes Ausführungsbeispiel von Befestigungsmitteln in Gestalt einer Befestigungslasche und eines Gegenhalters, die am Trägerkörper angeordnet sind und über die ein Sensor am Trägerkörper formschlüssig anordbar ist,
- Figur 3: eine perspektivische Ansicht der Anordnung von zwei Sensoren an einem Trägerkörper,
- Figur 4: eine weitere Ansicht der Anordnung eines Sensors an einem Trägerkörper mit einer weiteren Ausführungsform der Formschlusselemente,
- Figur 4a: eine erste Ansicht eines Formschlusselementes, das als Befestigungsdom ausgeführt ist und in dem ein Clip verrastet ist,
- Figur 4b: ein Befestigungsdom gemäß Figur 4a für eine weitere Reihe von Formschlusselementen zur Anordnung eines weiteren Sensors,
- Figur 5: eine Ansicht eines Querschnitts durch den Trägerkörper mit der Anordnung eines ersten Sensors für einen ersten Detektionsbereich und eines zweiten Sensors für einen zweiten Detektionsbereich,
- Figur 6a: eine Ansicht einer Elektrikeinheit zur Anordnung an einem Trägerkörper,
- Figur 6b: eine Ansicht einer Aufnahmeebene sowie zugeordnete Aufnahmemittel zur Anordnung einer Elektrikeinheit am Trägerkörper und
- Figur 6c: eine Anordnung einer Elektrikeinheit an einem Trägerkörper, wobei zur Anordnung Befestigungsmittel in Gestalt von Schraubelementen vorgesehen sind.

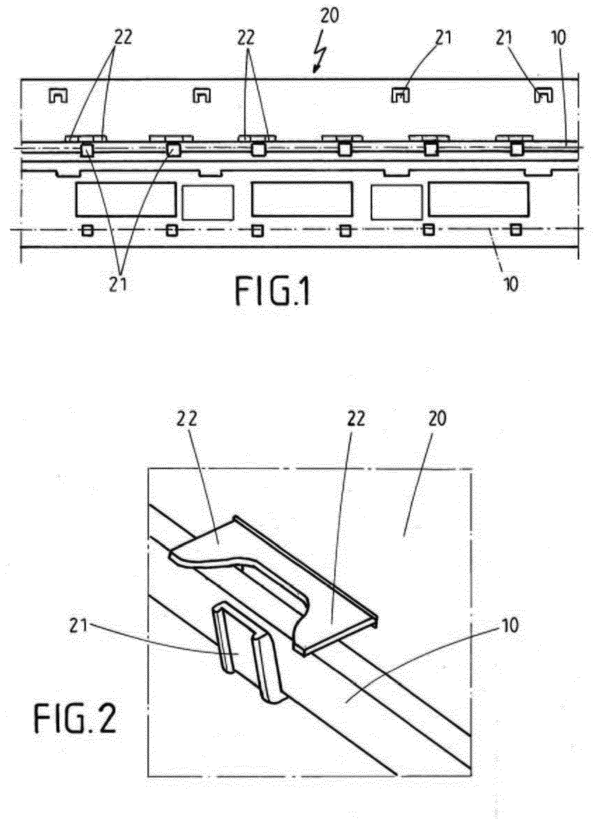

Figur 1 zeigt ein Ausführungsbeispiel eines Trägerkörpers 20, wie dieser vorzugsweise im Heckbereich in einem Kraftfahrzeug angeordnet werden kann. Der Trägerkörper 20 dient zur Aufnahme wenigstens eines Sensors 10. In der Ansicht ist ein erster Sensor 10 in einer oberen Anordnung vollständig dargestellt und ein zweiter Sensor 10 in einer unteren Anordnung mit einer strickpunktierten Linie angedeutet dargestellt. Wie die Darstellung zeigt, weist der Trägerkörper 20 eine längliche Erstreckung auf, sodass sich dieser über der Breite des Kraftfahrzeugs hinweg erstrecken kann und beispielsweise innenseitig hinter dem Stoßfänger im Kraftfahrzeug eingebaut sein kann.

Zur formschlüssigen Aufnahme der Sensoren 10 am Trägerkörper 20 dienen Formschlusselemente, die gemäß des vorliegenden Ausführungsbeispiels in Gestalt von Befestigungslaschen 21 ausgeführt sind, wobei sowohl für den oberen Sensor 10 als auch für den unteren Sensor 10 jeweils sechs Befestigungslaschen 21 in einer jeweiligen Reihe angeordnet vorgesehen sind. Jeder Befestigungslasche 21 sind zwei Gegenhalter 22 zugeordnet, so dass der Sensor 10 durch die Befestigungslaschen 21 und die Gegenhalter 22 formschlüssig am Trägerkörper 20 aufgenommen werden kann. Die formschlüssige Aufnahme des Sensors 10 am Trägerkörper 20 durch die Befestigungslaschen 21 und die zugeordneten Gegenhalter 22 ist in Figur 2 näher dargestellt.

Figur 2 zeigt eine perspektivische Ansicht der Aufnahme eines Sensors 10 am Trägerkörper 20. Der Trägerkörper 20 weist eine Erstreckungsebene auf, die etwa in der vertikalen verläuft. Ferner besitzt der Sensor 10 eine längliche, schlauchartige Gestalt und ist über eine Befestigungslasche 21 und zwei Gegenhalter 22 am Trägerkörper 20 aufgenommen. Sowohl die Befestigungslasche 21 als auch die Gegenhalter 22 sind einteilig und materialeinheitlich mit dem Trägerkörper 20 ausgeführt.

Zur Montage des Sensors 10 ist vorgesehen, dass der Sensor durch einen Monteur mit den Händen elastisch verformt wird, wobei das Material des Sensors vorzugsweise aus einem biegsamen, flexiblen Stoff hergestellt ist. Die Gegenhalter 22 sind benachbart neben der Befestigungslasche 21 angeordnet, so dass sich die Befestigungslasche 21 in einer L-förmigen Gestalt zwischen den beiden Gegenhaltern 22 befindet. Wird nun der Sensor 10 derart verbogen, dass sich der schlauchartige Körper des Sensors 10 zwischen den Gegenhaltern 22 und der Befestigungslasche 21 einfädeln lässt, so kann nach dem Einsetzen der Sensor 10 zwischen der Befestigungslasche 21 und den Gegenhaltern 22 wieder entspannt werden. Folglich nimmt der Sensor 10 durch elastische Rückverformung wieder seine alte Gestalt an und erstreckt sich im Wesentlichen in einer geraden Richtung. Im Ergebnis ist der Sensor 10 verliersicher und formschlüssig zwischen der Befestigungslasche 21 und den Gegenhaltern 22 am Trägerkörper 20 aufgenommen.

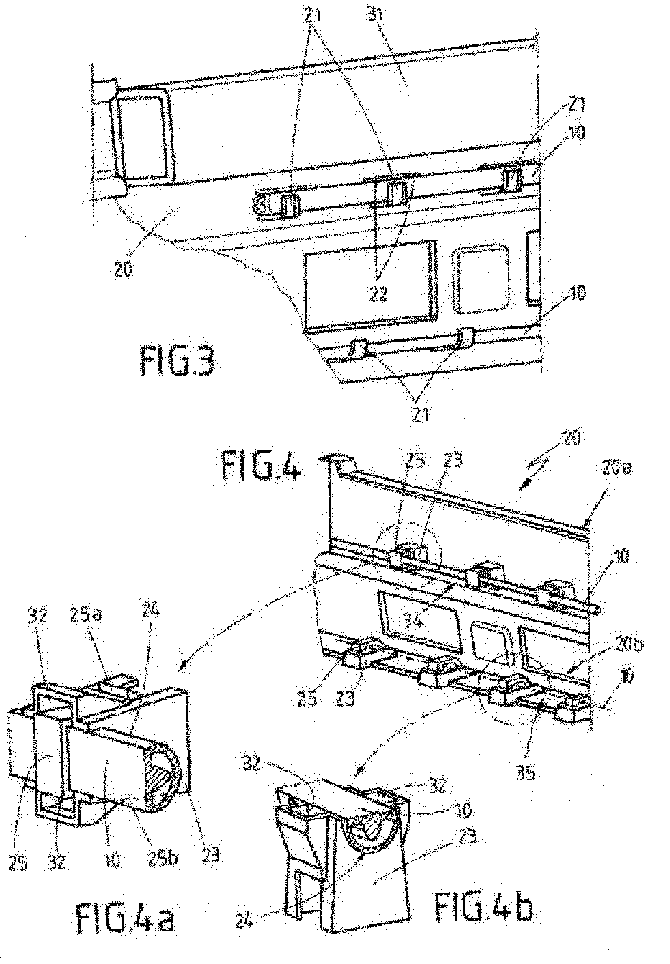

Figur 3 zeigt eine perspektivische Ansicht der Anordnung von zwei Sensoren 10 an einem Trägerkörper 20. Ferner ist ein Kraftfahrzeugelement 31 gezeigt, das beispielsweise ein Strukturbauteil im hinteren Bereich des Kraftfahrzeugs darstellen kann. Der Trägerkörper 20 kann dabei durch nicht näher gezeigte Befestigungsmittel direkt an diesem Strukturbauteil 31 des Kraftfahrzeugs befestigt werden.

Gemäß der Darstellung ist ein erster Sensor 10 in einer oberen Reihe von Formschlusselementen aufgenommen, wobei drei Befestigungslaschen 21 mit jeweils zugeordneten Gegenhaltern 22 gezeigt sind. Ebenso wie der erste Sensor 10 im oberen Bereich ist ein weiterer Sensor 10 im unteren Bereich angeordnet, der ebenfalls über eine Anzahl von Befestigungslaschen 21 mit zugeordneten Gegenhaltern 22 am Trägerkörper 20 angebracht ist.

Figur 4 zeigt ein weiteres Ausführungsbeispiel der formschlüssigen Anordnung von Sensoren 10 an einem Trägerkörper 20. Gemäß diesem Ausführungsbeispiel sind Formschlusselemente vorgesehen, die in Gestalt von Befestigungsdomen 23 am Trägerkörper 20 angebracht sind. Dabei können in die Befestigungsdome Clips 25 eingesetzt werden, um eine formschlüssige Anordnung der Sensoren 10 am Trägerkörper 20 zu schaffen. Der obere Sensor 10 ist gegenständlich dargestellt, wobei der untere Sensor 10 lediglich durch eine strichpunktierte Linie angedeutet ist. Beide Sensoren sind an mehreren Befestigungsdomen 23 am Trägerkörper 20 angebracht, und über Clips 25 an den Befestigungsdomen 23 gesichert. Der obere Sensor 10 befindet sich in einer Kehle am Trägerkörper 20, wobei dieser durch eine Stufe 34 in einen oberen Trägerbereich 20a und in einen unteren Trägerbereich 20b unterteilt ist. Die Kehle entsteht dabei zwischen der Stufe 34 und dem Trägerbereich 20a. Der untere Sensor 10 ist dabei unterseitig des unteren Trägerbereichs 20b angeordnet, so dass eine räumliche Trennung beider Sensoren entsteht. Die Befestigungsdome 23 erstrecken sich etwa orthogonal aus der Ebene des Trägerkörpers 20 heraus, wobei im unteren Trägerbereich 20b eine weitere Stufe 35 vorhanden ist, so dass sich die Befestigungsdome 23 zur Anordnung des oberen Sensors 10 etwa in der horizontalen und die unteren Befestigungsdome 23 in der Stufe 35 etwa vertikal erstrecken, wenn der Trägerkörper 20 im Fahrzeug montiert ist. Im Ergebnis entsteht eine gerichtete Aufnahme der Sensoren 10, wobei jedem der Sensoren 10 ein Detektionsbereich zugeordnet ist, und der Detektionsbereich des oberen Sensors 10 etwa horizontal aus dem Trägerkörper 20 abstrahlt, wobei der Detektionsbereich des unteren Sensors 10 etwa vertikal in Richtung zum Boden abstrahlt, auf dem das Fahrzeug steht bzw. fährt. Im Folgenden ist die Anordnung der Sensoren an den Befestigungsdomen 23 in Figur 4a und Figur 4b genauer gezeigt.

In den Figuren 4a und 4b sind Befestigungsdome 23 gezeigt, die jeweils einen Sensor 10 aufnehmen, der abschnittsweise dargestellt ist. Zur formschlüssigen Anordnung des Clips 25, gezeigt in Figur 4a, weisen die Befestigungsdome 23 Rastöffnungen 32 auf. Die Clips 25 besitzen dabei Widerhaken 25a, 25b, und weisen eine U-förmige Gestalt auf, um bei Verrasten der Widerhaken 25a und 25b in den Rastöffnungen 32 der Befestigungsdome 32 den Sensor 10 zu umschließen, der sich folglich zwischen dem Clip 25 und einer Aufnahmetasche 24 verliersicher am Befestigungsdom 23 befindet. Zur Montage kann folglich der Sensor 10 zunächst in die Aufnahmetasche 24 am Befestigungsdom 23 eingesetzt werden, um anschließend den Clip 25 über die Widerhaken 25a und 25b in den Rastöffnungen 32 zu verrasten.

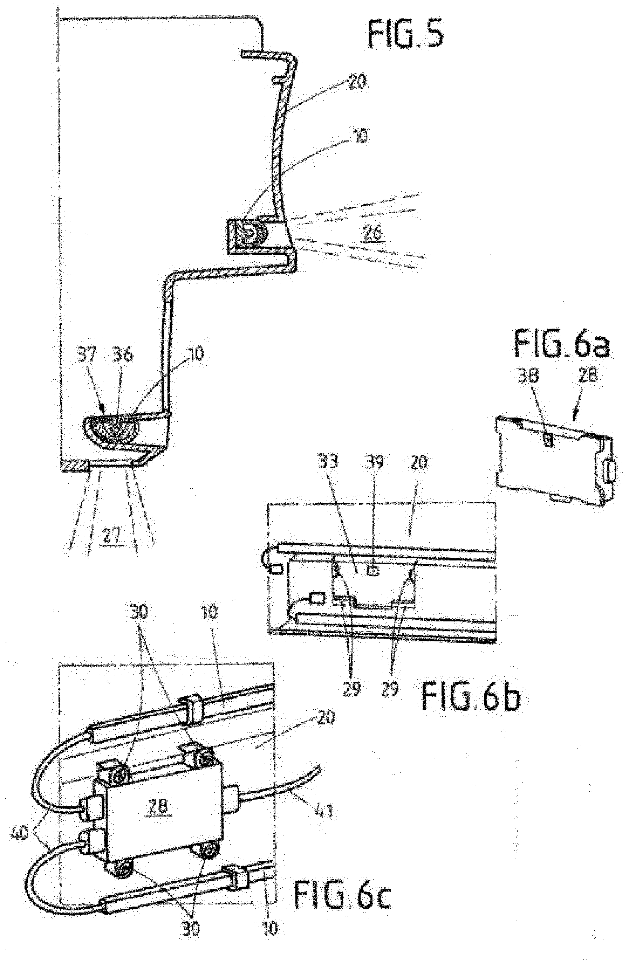

Figur 5 zeigt eine Querschnittsansicht durch den Trägerkörper 20. In diesem ist ein oberer Sensor 10 mit einem ersten Detektionsbereich 26 und ein unterer Sensor 10 mit einem zweiten Detektionsbereich 27 aufgenommen, wobei die Sensoren 10 in Richtung zu einem Stoßfänger weisen, der sich rechtsseitig des Trägerkörpers befindet, jedoch vereinfachend nicht dargestellt ist. Gemäß der Darstellung weisen die Sensoren 10 eine spezifische Kontur auf, die im Wesentlichen einem halbkreisförmigen Querschnitt entspricht. Etwa mittig im Querschnitt des Sensors 10 kann eine Sensorelektrode 36 und hinterseitig eine Abschirmung 37 vorhanden sein, wobei die Sensorelektrode 36 und die Abschirmung 37 insgesamt in einem Grundkörper eingegossen sind, der eine flexible Gestalt des Sensors 10 bildet. Durch die spezifische Anordnung der Abschirmung 37 hinterseitig hinter der Sensorelektrode 36 entsteht ein jeweiliger gerichteter Detektionsbereich 26 und 27, die getrennt voneinander am Trägerkörper 20 wirken und nach rechts und nach unten gerichtet durch den -nicht dargestellten Stoßfänger- hindurchtreten. Folglich kann beispielsweise über den Detektionsbereich 26 die Annäherung einer Person an das Fahrzeug detektiert werden, wobei erst dann eine Bewegung eines Körperteils durch den Detektionsbereich 27 erkannt wird, wenn die Person beispielsweise seinen Fuß unter das Fahrzeug bewegt, um in den Detektionsbereich 27 zu gelangen. Die Sensoren 10 sind in jeweilige Formschlussgeometrien im Trägerkörper 20 eingebracht.

Die Figuren 6a und 6b zeigen die Anordnung einer Elektrikeinheit 28 am Trägerkörper 20. Hierfür besitzt der Trägerkörper 20 eine Aufnahmeebene 33, gegen die die Elektrikeinheit 28 plan zur Anlage gebracht werden kann. Über die Aufnahmeebene 33 erstrecken sich Aufnahmemittel 29. Wird die Elektrikeinheit 28 zunächst plan gegen die Aufnahmeebene 33 zur Anlage gebracht, um die Elektrikeinheit 28 anschließend in einer vorgegebenen Richtung in der Bildebene nach unten zu bewegen, indem die Elektrikeinheit 28 auf der Aufnahmeebene 33 abgleitet, so können die Aufnahmemittel 29 die Elektrikeinheit 28 teilweise umschließen, so dass eine formschlüssige Anordnung der Elektrikeinheit 28 am Trägerkörper 20 ermöglicht ist. Eine Rastnase 38 kann nach vollständiger Verschiebung der Elektrikeinheit 28 auf der Aufnahmeebene 33 in eine Rastöffnung 39 einrasten, so dass einerseits die Aufnahmemittel 29 die Elektrikeinheit 28 umschließen und andererseits ein Herausrutschen der Elektrikeinheit 28 aus dem Formschluss durch die Aufnahmemittel 29 in der Bildebene nach oben verhindert wird, da die Rastnase 38 in der Rastöffnung 39 verrastet ist.

Figur 6c zeigt eine weitere Möglichkeit der Anordnung der Elektrikeinheit 28 am Trägerkörper 20 über Befestigungsmittel 30, die als Schraubenelemente 30 ausgeführt sind. Die Elektrikeinheit 28 ist zwischen zwei Sensoren 10 angeordnet, die jeweils eine elektrische Verbindung 40 zur Elektrikeinheit 28 aufweisen. Nach einer weiteren Ausführungsform können die Sensoren auch eine gemeinsames Steckverbindungselement zur elektrischen Verbindung mit der Elektrikeinheit aufweisen, sodass ein Mehrpolsteckelement, vorzugsweise ein 6-fach Steckelement zum Einsatz kommen kann. Eine weitere elektrische Verbindung 41 verbindet die Elektrikeinheit 28 mit einer weiteren elektrischen Komponente des Kraftfahrzeugs.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile einschließlich konstruktiven Einzelheiten, räumliche Anordnungen und Verfahrensschritte können sowohl für sich als auch in den verschiedensten Kombinationen erfindungswesentlich sein. Insbesondere sei angemerkt, dass die Formschlusselemente verschiedenartig ausgeführt sein können, wobei die verschiedenartige Ausführung jeweils miteinander kombiniert werden kann. Folglich kann an einem Trägerkörper 20 sowohl eine Kombination aus Befestigungslaschen 21 und Gegenhaltern 22 vorgesehen sein, die gleichermaßen auch mit Befestigungsdomen 23 zur Aufnahme von Sensoren 10 oder insbesondere zur Aufnahme nur eines Sensors 10 an einem Trägerkörper 20 kombiniert angeformt sein können. Ferner kann der Trägerkörper 20 als Stoßfänger am Kraftfahrzeug ausgeführt sein, so dass die jeweiligen Formschlusselemente zur Anordnung der Sensoren innenseitig am Stoßfänger vorhanden sein können und eine gleiche Ausgestaltung aufweisen können, wie vorliegend am separaten Trägerkörper 20 gezeigt.

### Bezugszeichenliste

- 10: Sensor
- 20: Trägerkörper, Trägermodul
- 20a: oberer Trägerbereich
- 20b: unterer Trägerbereich
- 21: Befestigungslasche
- 22: Gegenhalter
- 23: Befestigungsdom
- 24: Aufnahmetasche
- 25: Clip
- 25a: Widerhaken
- 25b: Widerhaken
- 26: erster Detektionsbereich
- 27: zweiter Detektionsbereich
- 28: Elektrikeinheit
- 29: Aufnahmemittel
- 30: Befestigungsmittel Schraubenelement
- 31: Kraftfahrzeugelement
- 32: Rastöffnung
- 33: Aufnahmeebene
- 34: Stufe
- 35: Stufe
- 36: Sensorelektrode
- 37: Abschirmung
- 38: Rastnase
- 39: Rastöffnung
- 40: elektrische Verbindung
- 41: elektrische Verbindung

## Patentansprüche

1. Anordnung einer Sensoreinrichtung mit wenigstens einem Sensor (10) für eine berührungslose Betätigung wenigstens eines beweglichen Teils eines Kraftfahrzeugs, insbesondere einer Klappe eines Kraftfahrzeugs, wobei der Sensor (10) an wenigstens einem Trägerkörper (20) am Kraftfahrzeug angeordnet ist, um eine Detektion eines Objektes in wenigstens einem an das Kraftfahrzeug angrenzenden Detektionsbereich zu ermöglichen, sodass über die Detektion die Betätigung der Klappe aktivierbar ist,
wobei der Sensor (10) formschlüssig und/oder kraftschlüssig am Trägerkörper (20) angeordnet ist, wobei der Sensor (10) eine längliche Erstreckung aufweist und biegsam und elastisch verformbar ist, **dadurch gekennzeichnet, dass** der Trägerkörper (20) eine in seiner Breitenrichtung verlaufende erste Reihe von Formschlusselementen und wenigstens eine zweite ebenfalls in Breitenrichtung verlaufende Reihe von Formschlusselementen aufweist, wobei ein oberer Sensor (10) einen ersten Detektionsbereich (26) aufweist, der im Wesentlichen für eine horizontale Erfassung im Bereich neben oder hinter dem Kraftfahrzeug ausgebildet ist und wobei ein unterer Sensor (10) einen zweiten Detektionsbereich (27) aufweist, der im Wesentlichen für eine vertikale Erfassung im Bereich unter dem Kraftfahrzeug ausgebildet ist, wobei die Reihen der Formschlusselemente eine in der Einbausituation des Trägerkörpers (20) im Kraftfahrzeug obere und eine untere Reihe bilden, um den ersten, oberen Sensor (10) und den zweiten unteren Sensor (10) aufzunehmen.

2. Anordnung nach Anspruch 1, **dadurch gekennzeichnet, dass** der Sensor (10) eine längliche Erstreckung in Breitenrichtung des Trägerkörpers (20) aufweist, insbesondere dass der Sensor (10) schlauchartig ist, so dass sich der Sensor über die Fahrzeugbreite hinweg erstreckt.

3. Anordnung nach Anspruch 1 oder 2, **dadurch gekennzeichnet, dass** der Sensor (10) ein flexibles Kunststoff- oder Kautschukmaterial aufweist.

4. Anordnung nach einem der vorhergehenden Ansprüche,
**dadurch gekennzeichnet,**
**dass** der Trägerkörper (20) eine in einer Breitenrichtung gestreckte Form aufweist und derart im Kraftfahrzeug anordbar ist, dass sich die Breitenrichtung quer über der Fahrzeugbreite erstreckt.

5. Anordnung nach einem der vorhergehenden Ansprüche,
**dadurch gekennzeichnet,**
**dass** der Sensor (10) mit seiner länglichen Erstreckung in Breitenrichtung des Trägerkörpers (20) an diesem angeordnet ist, sodass sich der Sensor (10) über die Fahrzeugbreite vorzugsweise im Heckbereich des Kraftfahrzeuges erstreckt.

6. Anordnung nach einem der vorhergehenden Ansprüche,
**dadurch gekennzeichnet,**
**dass** der Trägerkörper (20) wenigstens ein Formschlusselement aufweist, über das der zumindest eine Sensor (10) am Trägerkörper (20) formschlüssig anordbar ist, wobei zumindest ein erstes Formschlusselement als Befestigungslasche (21) ausgebildet ist, wobei zumindest ein zweites Formschlusselement als Gegenhalter (22) ausgebildet ist, der derart aus der Erstreckungsebene des Trägerkörpers (20) herausragt und eine Position relativ zur Befestigungslasche (21) aufweist, dass der Sensor (10) verliersicher zwischen der Befestigungslasche (21) und dem Gegenhalter (22) angeordnet ist.

7. Anordnung nach Anspruch 6,
**dadurch gekennzeichnet,**
**dass** der Sensor (10) eine Flexibilität besitzt, derart, dass der Sensor (10) durch eine händisch einbringbare elastische Verformung zwischen die Befestigungslasche (21) und vorzugsweise zwei Gegenhalter (22) einbringbar ist.

8. Anordnung nach einem der vorhergehenden Ansprüche,
**dadurch gekennzeichnet,**
**dass** das Kraftfahrzeug einen Stoßfänger und/oder ein Strukturbauteil aufweist, wobei der Trägerkörper (20) durch den Stoßfänger bzw. durch das Strukturbauteil gebildet ist.

9. Anordnung nach einem der vorhergehenden Ansprüche,
**dadurch gekennzeichnet,**
**dass** der Sensor (10) formschlüssig und/oder kraftschlüssig am Trägerkörper (20) angeordnet ist, insbesondere dass eine Clips- oder Schnappverbindung vorgesehen ist, die zur Befestigung des Sensors (10) am Trägerkörper (20) dient.

## Claims

1. Assembly of a sensor device with at least one sensor (10) for contactless actuation of at least one movable part of a motor vehicle, in particular a flap of a motor vehicle, wherein the sensor (10) is arranged on at least one carrier body (20) on the motor vehicle in order to enable detection of an object in at least one detection area adjacent to the motor vehicle, so that actuation of the flap can be activated via the detection,
wherein the sensor (10) is arranged positively and/or non-positively on the carrier body (20), the sensor (10) having an elongated extension and being flexibly and elastically deformable,
**characterised in that** the carrier body (20) has a first row of positive locking elements extending in its width direction and at least one second row of positive locking elements likewise extending in the width direction,
wherein an upper sensor (10) has a first detection area (26) which is essentially designed for horizontal detection in the area next to or behind the motor vehicle, and wherein a lower sensor (10) has a second detection area (27) which is essentially designed for vertical detection in the area under the motor vehicle, wherein the rows of positive-locking elements form an upper and a lower row in the installation situation of the carrier body (20) in the motor vehicle in order to receive the first, upper sensor (10) and the second, lower sensor (10).

2. Assembly according to claim 1,
**characterized in that,**
the sensor (10) has an elongated extension in the width direction of the carrier body (20), in particular **in that** the sensor (10) is tubular, so that the sensor extends over the width of the vehicle.

3. Assembly according to claim 1 or 2,
**characterized in that,**
the sensor (10) comprises a flexible plastic or rubber material.

4. Assembly according to one of the preceding claims,
**characterized in that,**
the carrier body (20) has a shape stretched in a width direction and can be arranged in the motor vehicle in such a way that the width direction extends transversely over the vehicle width.

5. Assembly according to one of the preceding claims,
**characterized in that,**
the sensor (10) is arranged with its longitudinal extension in the width direction of the carrier body (20) on the latter, so that the sensor (10) extends over the vehicle width preferably in the rear region of the motor vehicle.

6. Assembly according to one of the preceding claims,
**characterized in that,**
the carrier body (20) has at least one form-fit element, via which the at least one sensor (10) can be arranged in a form-fit manner on the carrier body (20), at least one first form-fit element being designed as a fastening tab (21), wherein at least one second positive-locking element is formed as a counterholder (22) which projects from the plane of extension of the carrier body (20) and has a position relative to the fastening tab (21) in such a way that the sensor (10) is arranged between the fastening tab (21) and the counterholder (22) in a captive manner.

7. Assembly according to claim 6,
**characterized in that,**
the sensor (10) has a flexibility such that the sensor (10) can be inserted between the fastening tab (21) and preferably two counterholders (22) by means of a manually insertable elastic deformation.

8. Assembly according to one of the preceding claims,
**characterized in that,**
the motor vehicle has a bumper and/or a structural component, the carrier body (20) being formed by the bumper or by the structural component.

9. Assembly according to one of the preceding claims,
**characterized in that,**
the sensor (10) is arranged positively and/or non-positively on the carrier body (20), in particular **in that** a clip or snap connection is provided which is used to fasten the sensor (10) to the carrier body (20).

## Revendications

1. Dispositif d'un dispositif de détection avec au moins un capteur (10) pour l'actionnement sans contact d'au moins une partie mobile d'un véhicule automobile, en particulier d'un volet d'un véhicule automobile, dans lequel le capteur (10) est disposé sur au moins un corps de support (20) sur le véhicule automobile pour permettre la détection d'un objet dans au moins une zone de détection voisine du véhicule automobile, de sorte que l'actionnement du volet peut être activé par la détection,
dans lequel le capteur (10) est disposé de manière positive et/ou par adhérence sur le corps de support (20), le capteur (10) ayant une extension allongée et étant déformable de manière flexible et élastique,
**caractérisé en ce que** le corps de support (20) présente une première rangée d'éléments de verrouillage positif s'étendant dans le sens de sa largeur et au moins une deuxième rangée d'éléments de verrouillage positif s'étendant également dans le sens de la largeur,
dans lequel un capteur supérieur (10) présente une première zone de détection (26) qui est essentiellement conçue pour une détection horizontale dans la zone à côté ou derrière le véhicule automobile, et dans lequel un capteur inférieur (10) présente une deuxième zone de détection (27) qui est essentiellement conçue pour une détection verticale dans la zone sous le véhicule automobile, les rangées d'éléments de verrouillage positif formant une rangée supérieure et une rangée inférieure dans la situation de montage du corps de support (20) dans le véhicule automobile afin de recevoir le premier capteur supérieur (10) et le deuxième capteur inférieur (10).

2. Dispositif selon la revendication 1,
**caractérisé en ce que**
le capteur (10) présente une extension allongée dans le sens de la largeur du corps de support (20), en particulier **en ce que** le capteur (10) est tubulaire, de sorte que le capteur s'étend sur la largeur du véhicule.

3. Dispositif selon la revendication 1 ou 2,
**caractérisé en ce que**
le capteur (10) comprend d'une matière plastique ou de caoutchouc souple.

4. Dispositif selon l'une des revendications précédentes,
**caractérisé en ce que**
le corps de support (20) a une forme étirée dans le sens de la largeur et peut être disposé dans le véhicule automobile de telle sorte que le sens de la largeur s'étende transversalement sur la largeur du véhicule.

5. Dispositif selon l'une des revendications précédentes,
**caractérisé en ce que**
le capteur (10) est disposé avec son extension longitudinale dans le sens de la largeur du corps de support (20) sur ce dernier, de sorte que le capteur (10) s'étend sur la largeur du véhicule, de préférence dans la zone arrière du véhicule automobile.

6. Dispositif selon l'une des revendications précédentes,
**caractérisé en ce que**
le corps de support (20) présente au moins un élément de verrouillage positif, par lequel le au moins un capteur (10) peut être disposé par engagement positif sur le corps de support (20), au moins un premier élément de verrouillage positif étant conçu comme une patte de fixation (21), dans lequel au moins un deuxième élément de verrouillage positif est réalisé sous la forme d'un contre-support (22) qui fait saillie du plan d'extension du corps de support (20) et qui présente une position par rapport à la patte de fixation (21) telle que le capteur (10) est disposé de manière imperdable entre la patte de fixation (21) et le contre-support (22).

7. Dispositif selon la revendication 6,
**caractérisé en ce que**
le capteur (10) a une flexibilité telle que le capteur (10) peut être inséré entre la patte de fixation (21) et de préférence deux contre-supports (22) au moyen d'une déformation élastique pouvant être insérée manuellement.

8. Dispositif selon l'une des revendications précédentes,
**caractérisé en ce que**
le véhicule automobile comporte un pare-chocs et/ou un élément de structure, le corps de support (20) étant formé par le pare-chocs ou par l'élément de structure.

9. Dispositif selon l'une des revendications précédentes,
**caractérisé en ce que**
le capteur (10) est disposé sur le corps de support (20) de manière positive et/ou par adhérence, en particulier **en ce qu'**il est prévu une liaison par clip ou par encliquetage qui sert à fixer le capteur (10) sur le corps de support (20).
